(19) Europäisches Patentamt
European Patent Office
Office européen des brevets

(11) EP 1 068 501 B1

(12) EUROPÄISCHE PATENTSCHRIFT

(45) Veröffentlichungstag und Bekanntmachung des Hinweises auf die Patenterteilung:
**23.07.2003 Patentblatt 2003/30**

(51) Int Cl.7: **G01L 3/10**, H01C 10/10

(21) Anmeldenummer: **99919166.1**

(86) Internationale Anmeldenummer:
**PCT/EP99/02207**

(22) Anmeldetag: **31.03.1999**

(87) Internationale Veröffentlichungsnummer:
**WO 99/050632 (07.10.1999 Gazette 1999/40)**

(54) **DEHNUNGSEMPFINDLICHER WIDERSTAND**

STRAIN-SENSITIVE RESISTOR

RESISTANCE SENSIBLE A LA TENSION

(84) Benannte Vertragsstaaten:
**CH DE FR GB LI**

(30) Priorität: **31.03.1998 DE 19814261**

(43) Veröffentlichungstag der Anmeldung:
**17.01.2001 Patentblatt 2001/03**

(73) Patentinhaber: **Siemens Aktiengesellschaft
80333 München (DE)**

(72) Erfinder:
• **SCHÄFERT, Arthur
D-65824 Schwalbach (DE)**

• **IRION, Jürgen
D-65843 Sulzbach (DE)**
• **PENZAR, Zlatko
D-63128 Dietzenbach (DE)**
• **PORTH, Wolfgang
D-60388 Frankfurt (DE)**

(56) Entgegenhaltungen:
EP-A- 0 570 066     EP-A- 0 921 384
DE-A- 3 528 364     DE-A- 4 009 286
DE-A- 4 014 511     GB-A- 2 234 629
US-A- 4 977 775     US-A- 5 230 252
US-A- 5 242 722

**Beschreibung**

Die Erfindung betrifft einen dehnungsempfindlichen Widerstand bestehend aus einer auf einem Trägerelement angeordneten Widerstandsschicht sowie ein mit diesem Widerstand hergestellten mechanisch-elektrischen Wandler.

Aus der noch unveröffentlichten deutschen Patentanmeldung 197 47 001.7 ist ein dehnungsempfindlicher Widerstand bekannt, bei welchem der Widerstand auf einem als Trägerelement ausgebildeten Welle angeordnet ist. Die Welle ist dabei einer mechanischen Belastung ausgesetzt, wobei die daraus resultierende Flächendehnung durch den ohne Zwischenträger auf dieser Welle angeordneten dehnungsempfindlichen Widerstand abgegriffen wird. Die Widerstandsschicht ist dabei in Drucktechnik in Form einer Widerstandspaste auf der Welle aufgebracht und nach einer Wärmebehandlung mit dieser innig verbunden.

Bei einer Torsion der Welle bilden sich an der Oberfläche der Weile zwei Hauptdehnungen unter 45° aus. Diese werden zur Bestimmung des Drehmomentes ausgewertet. Die Hauptdehnungen haben dabei den gleichen Betrag, aber umgekehrtes Vorzeichen.

Die verwendeten Dickschicht-Widerstandspasten haben dabei sowohl für die longitudinale als auch die transversale Dehnung positive Dehnungsfaktoren (K-Faktoren), weshalb für die Bestimmung der effektiven Widerstandsänderung nur die Differenz aus diesen beiden Faktoren genutzt werden kann. Die an dem Drehmomentsensor abgefaßten Signalspannungen sind daher sehr gering und müssen durch eine umfangreiche elektrische Anordnung verstärkt werden, wodurch der Einfluß von Störgrößen auf das kleine Meßsignal erhöht wird.

Gemäß EP 570066 A1 ist ein Dehnungstransformator zur Drehmomentenmessung einer zylindrischen Welle bekannt, bei welchem dehnungsempfindliche Widerstände über einen Hilfsträger auf der Welle angeordnet sind. Der Hilfsträger weißt zwei Ausnehmungen auf, zwischen denen die dehnungsempfindlichen Widerstände plaziert sind. Durch den Hilfsträger, kann es zu Signalverfälschungen kommen. Auch in der GB 2234629 A1 sind die Dehnungsmessstreifen zwischen zwei Ausnehmungen angeordnet.

Aus der US-PS 5,230,252 ist es bekannt, die dehnungsempfindlichen Widerstände auf einem Trägerkörper anzuordnen, welcher mit dem auf Torsion zu beanspruchten Bauteil verbunden ist. Die dehnungsempfindlichen Widerstände sind dabei zwischen zwei Ausnehmungen in einem Bereich konstanter Kräfte im Zentrum angeordnet.

Der Erfindung liegt somit die Aufgabe zugrunde, einen dehnungsempfindlichen Widerstand anzugeben, bei welchem eine Erhöhung des am Widerstand abgegriffenen Meßsignals auf einfache Art und Weise realisiert werden kann.

Erfindungsgemäß wird die Aufgabe durch die Merkmale des Kennzeichens des Patentanspruchs 1 gelöst.

Der Vorteil der Erfindung besteht darin, daß das Signalverhalten des Sensors ohne komplexe Änderung der Wellengeometrie einfach erhöht wird. Ein solcher Sensor ist für die Massenproduktion geeignet, da er kosten- und zeitgünstig herstellbar ist.

Wenn das Trägerelement der Widerstandsschicht gleichzeitig das mechanisch durch Torsion zu beanspruchende Bauteil darstellt, kann auf einen Zwischenträger zwi sehen dehnungsempfindlichen Widerstand und zu belastendem Bauteil verzichtet werden. Die zu detektierende mechanische Belastung wird dabei direkt von dem zu belastenden Bauteil abgegriffen, ohne das durch den Zwischenträger erzeugte Signalverfälschungen auftreten. Ein solcher Widerstand reduziert die Herstellungskosten erheblich.

Aufgrund der Ausnehmung überlagern sich die mechanischen, am Trägerelement angreifenden Spannungen wie z. B. Torsion und Biegung, wobei die Dehnungen in den Hauptrichtungen (longitudinal, transversal) einen ungleichen Betrag aufweisen.

Diese Ausnehmung kann durch einfach an dem Trägerelement zu realisierende Veränderungen wie z. B. Bohrungen, Kerben und Schlitzen hergestellt werden, so daß die beiden Hauptdehnungsrichtungen an der Oberfläche des Trägerelementes aufgrund von Torsionen nicht mehr die gleichen Beträge aufweisen.

Vorteilhafterweise ist die Ausnehmung als durchgängige Öffnung des Trägerelementes ausgebildet.

In einer Weiterbildung ist die Öffnung als Langloch ausgebildet, wobei die Widerstandsschicht in der Nähe des radialen Bereiches des Langloches angeordnet ist.

Besonders einfach ist der dehnungsempfindliche Widerstand herstellbar, wenn die Widerstandsschicht auf einer plan ausgebildeten Oberfläche des Trägerelementes angeordnet ist.

Eine zuverlässige unlösbare Verbindung wird erreicht, wenn das mechanisch zu belastende Bauteil und die Widerstandsschicht über eine innige Verbindung miteinan der verbunden z. B. versintert sind. Dies wird erzielt, indem die pastenartig ausgebildete, in Drucktechnik auf das Trägerelement aufgebrachte Widerstandsschicht während eines Hochtemperaturprozesses mit dem mechanischen Bauteil versintert wird.

In einer Weiterbildung ist das Trägerelement elektrisch leitend ausgebildet, wobei zwischen der Widerstandsschicht und dem Trägerelement eine Isolationsschicht angeordnet ist. Eine solche Ausgestaltung ist besonders dann sinnvoll, wenn das mechanisch zu belastende Bauteil aus Metall besteht, wie es beispielsweise beim Einsatz als Drehmomentsensor in Lenkhilfesystemen der Fall ist. Somit können Kurzschlüsse am Sensor zuverlässig verhindert werden.

in einer Ausgestaltung ist die Isolationsschicht pastenartig ausgebildet und wird in einem selbständigen Hochtemperaturprozeß vor Aufbringen der Widerstandsschicht oder während eines Hochtemperaturprozesses gemeinsam mit der Widerstandsschicht auf das Trägerelement aufgebracht.

Alternativ dazu wird die Isolationsschicht, wie beschrieben, entweder selbständig oder gemeinsam mit der Widerstandsschicht mit dem Trägerelement versintert, wenn die Isolationsschicht folienartig ausgebildet ist.

Dabei geht die Isolationsschicht eine innige Verbindung mit dem zu belastenden Bauteil ein. Diese Verbindung ist prozeßsicher zu realisieren und ausgesprochen langzeitstabil.

insbesondere die Herstellung des dehnungsempfindlichen Widerstandes mit einer folienähnlichen Isolationsschicht ermöglicht das Aufbringen des Dehnungsmeßstreifens auf einem Bauteil mit nicht planer Oberfläche.

Bei einem Verfahren zur Herstellung des dehnungsempfindlichen Widerstandes, bei welchem auf dem Trägerelement nacheinander die Isolationsschicht und die Wider standsschicht aufgebracht werden, ist die folienartig ausgebildete, die Widerstandsschicht tragende Isolationsschicht in mindestens einem Bereich annähernd der Form der Ausnehmung an der Oberfläche des Trägerelementes angepaßt, wobei dieser

Bereich deckungsgleich mit dieser Form der Ausnehmung auf die Oberfläche des Trägerelementes aufgebracht wird und anschließend wärmebeaufschlagt wird.

Dies hat den Vorteil, daß die Isolationsschicht gleichzeitig als Justierhilfe beim anschließenden Aufbringen der Widerstandsstruktur auf das Trägerelement genutzt wird und somit sichergestellt wird, daß die Widerstandsschicht in dem Bereich des Trägerelementes angeordnet ist, wo die größte Differenz zwischen longitudinaler und transversaler Dehnung auftritt.

In einer weiteren Weiterbildung der Erfindung sind die Isolationsschicht und/oder die Widerstandsschicht auf einem Trägerblatt angeordnet, wonach die die Isolations-und/oder Widerstandsschicht tragende Seite des Trägerblattes mit einer flexiblen Folienschicht überdeckt wird, deren Haftung an der Isolations- und/oder Widerstandsschicht größer ist als die Haftung des Trägerbiattes an der Isoiations-und/oder Widerstandsschicht, wobei mindestens die Folisnschicht in einem Bereich der Form der Ausnehmung an der Oberfläche des Trägerelementes angepaßt ist, und die Folienschicht mit der Isolations- und/oder Widerstandsschicht derart auf das Trägerelement aufgebracht wird, daß die übereinstimmend geformten Bereiche von Ausnehmung und Folienschicht deckungsgleich ausgerichtet sind, wobei das Trägerelement zum Ausbrennen der Folienschicht und Aufsintem der Isolation und/oder Widerstandsschicht anschließend wärmebeaufschlagt wird.

Der Vorteil der Erfindung besteht darin, daß die vorhandene Struktur auf einem Trägermaterial in Form des Trägerblattes hergestellt wird und nach der Herstellung mit Hilfe der Transportfolie in der Art eines Abziehbildes auf dem Trägerelement plaziert wird. Auch in diesem Fall wird durch die Form der Transportfolie die Justage dieser Anordnung auf dem Trägerelement erleichtert. Aufgrund dieser Verfahrensweise läßt sich die gewünschte Schichtstruktur auf jede erdenkliche geometrische Form des Trägerelementes aufziehen und bei der sich anschließenden Wärmebehandlung zu einer haftfesten Schicht sintern.

Bei dieser Ausführung sind sowohl die Isolationsschicht als auch die Widerstandsschicht auf einem einzigen Trägerblatt angeordnet, und werden mit nur einer Folienschicht transportiert.

Auf diese Weise wird ein Widerstand hergestellt, der auch bei lang anhaltender mechanischen und thermischen Belastung zuverlässig auf nicht planen Oberflächen von Trägerelementen haftet. Dieses ist insbesondere dann vorteilhaft, wenn das Trägerelement ein mechanisch zu belastendes Bauteil ist, auf welches durch Sinterung Schichten aufgebracht werden.

Vorteilhafterweise ist die Isolations- und/oder die Widerstandsschicht in Drucktechnik auf das Trägerblatt aufgebracht und getrocknet Somit ist es nicht nur möglich einfache unstrulcturierte Schichten, sondern auch strukturierte Gebilde wie ganze Widerstands-Netzwerke auf einer nicht planen Oberfläche eines Trägerelementes aufzubringen.

Mit Hilfe eines solchen Herstellungsverfahrens lassen sich Abrollstrukturen herstellen, die von einem Rechner bestimmte Abmessungen aufweisen, die erst bei Aufbringung auf die nicht plane Oberfläche ihre erforderliche geometrische Struktur und Abmaße erhalten.

In einer Ausgestaltung wird die Isolationsschicht in Form einer Glasfritte auf das Trägerblatt aufgedruckt. Nach dem Trocknen der Glasfritte wird eine Leitpaste als Widerstandsschicht auf die Isolationsschicht aufgedruckt und getrocknet, wobei anschließend die Folienschicht in Form eines Kunstharzfilmes aufgebracht wird.

Alternativ dazu wird eine auf einem ersten Trägerblatt angeordnete und getrocknete Isolationsschicht auf das Trägerelement mittels der Folienschicht aufgebracht und wärmebeaufschlagt, und anschließend die auf einem zweiten Trägerblatt gedruckte und getrocknete Widerstandsschicht mit Hilfe einer auf ihr angeordneten zweiten Folienschicht auf der schon wärmebehandelten Isolationsschicht positioniert und anschließend ebenfalls wärmebehandelt.

Das Verfahren hat den Vorteil, dass je nach Anwendungsfall sowohl die gesamte Struktur auf einem Trägerblatt herstellbar ist und mittels einer einzigen Folienschicht vom Trägerblatt auf das Trägerelement transportiert werden kann oder aber auch jede Schicht der Struktur einzeln auf einem Trägerblatt hergestellt wird. Die einzeln hergestellte Schicht wird ebenfalls mittels einer Folie auf dem Trägerelement positioniert.

In einer anderen Weiterbildung der Erfindung besteht ein mechanisch-elektrischer Wandler aus einem Trägerelement, auf welchem eine die dehnungsempfindlichen Widerstände bildende Widerstandsschicht angeordnet ist, wobei die Widerstandsschicht und das Trägerelement durch eine Isolationsschicht getrennt sind und an den Widerständen ein der Dehnung entsprechendes elektrisches Signal abnehmbar ist und das Trägerelement auf seiner Oberfläche eine Ausnehmung aufweist. Dabei ist das Trägerelement das mechanisch durch Torsion zu belastende Bauteil, wobei die Widerstände in mindestens einem Bereich der Oberfläche des Trägerelementes positioniert sind, welcher bei mechanischer Beanspruchung des Trägerelementes auf Grund der Überlagerung von Torsions- und Biegespannungen ein betragsmäßig ungleiches Verhältnis von longitudinaler und transversaler Dehnung erzeugt, wobei auf dem Trägerelement eine Auswerteelektronik für das der Dehnung entsprechende elektrische Signal angeordnet ist.

Die Erfindung hat den Vorteil, dass sowohl das Sensorelement als auch die Sensorelektronik direkt auf dem zu belastenden Bauteil aufgebracht werden.

In einer Ausgestaltung sind die Dehnungsmeßwidarstände und die Struktur der Auswerteelektronik wie z. B. Leiterbahn, Kontaktstellen, Dickschichtwiderstände auf einer gemeinsamen folienartigen Isoladensschicht angeordnet, die dann gemeinsam auf das mechanisch zu belastende Bauteil aufgesintert werden.

Diese Herstellung von Sensorelement und Sensorelektronik ermöglicht die Anordnung auch auf Bauteilen, die keine plane Oberfläche aufweisen, z. B. auf runden Bauteilen.

Die Erfindung läßt zahlreiche Ausführungsformeln zu. Eine davon soll anhand der in der Zeichnung dargestellten Figuren näher erläutert werden.

Es zeigt:

Figur 1: eine Ausführung eines Drehmomentsensors

Figur 2: erfindungsgemäßer Dehnungsmeßstreifen im Schnitt

Figur 3a: Draufsicht auf ein erstes erfindungsgemäß gestaltetes Trägerelement

Figur 3b: Querschnitt des Trägerelementes

Figur 4: Draufsicht auf ein zweites erfindungsgemäß gestaltetes Trägerelement

Figur 5: Querschnitt eines auf einem Trägerblatt angeordneten dehnungsempfindlichen Meßwiderstandes

Figur 6: eine Ausführung des Drehmomentsensorhybrids

Figur 7: Schnittdarstellung des Drehmomentsensorhybrids

Gleiche Merkmale sind mit gleichem Bezugszeichen gekennzeichnet.

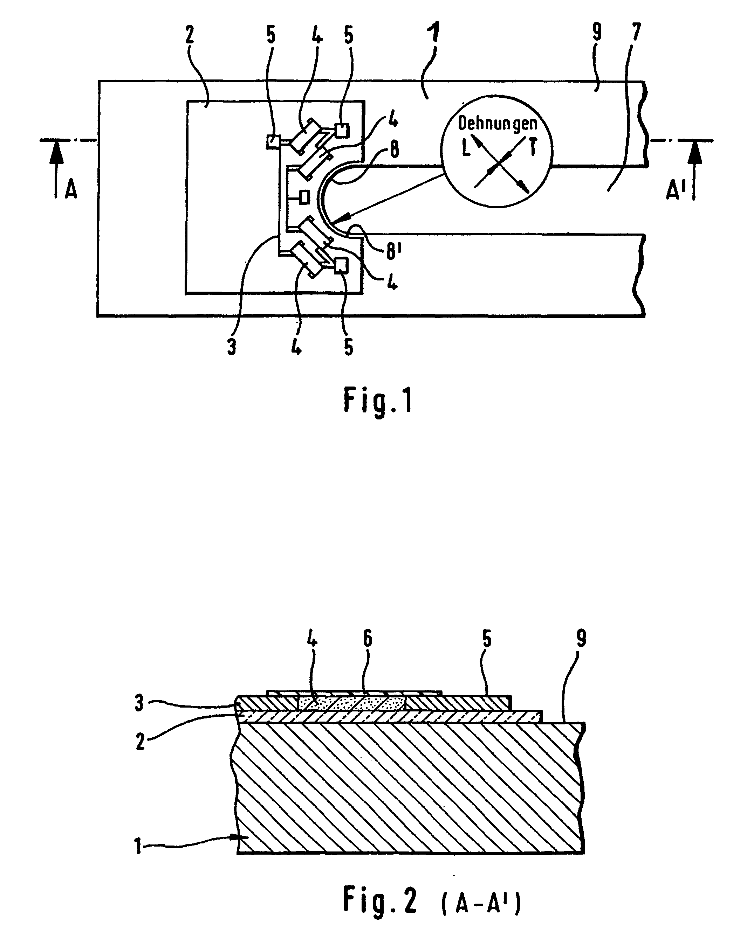

In Figur 1 ist schematisch der erfindungsgemäße DMS-Drehmomentsensor dargestellt, welcher eine Widerstandsmeßbrücke aufweist, die aus vier identisch aufgebauten dehnungsempfindlichen Widerständen besteht, welche über Leiterbahnen 3 elektrisch miteinander verknüpft sind. Diese Widerstandsbrücke ist in ihrer gesamten Ausdehnung auf einem Dielektrikum 2 angeordnet, welches wiederum direkt auf dem Träger 1 aufliegt.

Ein Schnitt durch einen dehnungsempfindlichen Widerstand ist in Figur 2 dargestellt. Auf einem Träger 1, welcher quaderförmig ausgebildet ist und aus Stahl besteht, ist ein Dielektrikum 2 aufgebracht. Auf dem Dielektrikum 2 ist eine Leiterbahn 3 mit Kontaktflächen 5 zur elektrischen Verbindung des Widerstandes mit anderen Schaltungsteilen angeordnet. Auf der Leiterbahn 3 ist wiederum eine elektrische Widerstandsschicht 4 angeordnet. Den Abschluß bildet eine Passivierungsschicht 6, die nur die Kontaktflächen 5 unbedeckt läßt. Der Träger 1 ist dabei eine Welle, an welcher die Flächendehnung aufgrund einer mechanischen Belastung dieser direkt durch den Dehnungsmeßstreifen 4 abgegriffen wird. Der beschriebene Dehnungsmeßstreifen wird in Dickschichttechnologie unmittelbar auf den Träger 1 hergestellt, welcher im vorliegenden Fall mit dem durch Torsion beanspruchten Bauteil z. B. einer Welle identisch ist.

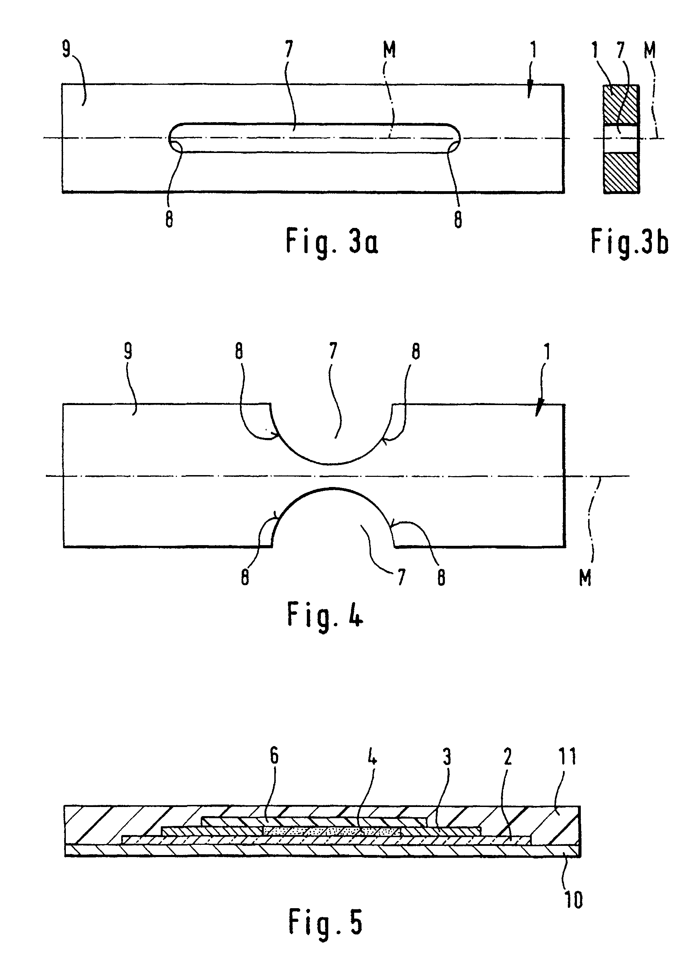

Figur 3a zeigt eine Draufsicht auf die rechteckförmige Oberfläche 9 der Welle 1, Die Welle 1 weist entlang ihrer Längserstreckung mittig ein Langloch 7 auf, welches die Welle 1 vollständig durchsetzt. Das Langloch 7 weist an seinen Enden radiale Bereiche 8 auf, in welchen bei einer auf die Welle 1 einwirkenden Torsion entlang der dargestellten Mittellinie M zwei Hauptdehnungen ungleichen Betrages an der Oberfläche 9 der Welle 1 auftreten, welche aus Sicht der Widerstandsschicht 4 einer Longitudinaldehnung L und einer Transversaldehnung T entsprechen.

Dieser Effekt wird ausgenutzt, um das Meßsignal, welches an den Kontaktflächen 5 von der aus den vier Dehnungsmeßstreifen bestehenden Meßbrücke abgenommen wird (vgl. Figur 1).

Das gemeinsame Dielektrikum 2 für alle Meßwiderstände ist dem radialen Bereich 8 des Langloches 7 angepaßt.

Bei einer, einen rechteckigen Querschnitt aufweisenden Welle ohne geometrische Änderungen werden die zwei Hauptdehnungen an der Oberfläche 9 unter 45° zur Welle ausgenutzt. Die verwendeten Dickschichtwiderstandspasten weisen positive K-Faktoren für die longitudinale und transversale Dehnung auf. Die effektive Widerstandsänderung bestimmt sich dabei aus der Differenz der K-Faktoren:

$$\frac{\Delta R}{R} = \varepsilon_L \cdot K_L + \varepsilon_T \cdot K_T$$

wobei

$$\varepsilon_L = - \varepsilon_T$$

Daraus ergibt sich ein

$$K_{Effektiv} = \varepsilon \cdot (K_L - K_T)$$

*Dabei ist*

$K_L$      K-Faktor für die longitudinale Dehnung
$K_T$      K-Faktor für die transversale Dehnung
$\varepsilon$      Dehnung

Bei der beschriebenen Rechteckwelle 1 (Figur 3b) wird in Folge des Langloches 7 der Dehnungsmeßstreifen in der beschriebenen Art und Weise im radialen Bereich 8 des Langloches 7 angeordnet. Dadurch überlagern sich die auf der Oberfläche angreifenden mechanischen Spannungen z. B. Torsion und Biegung. Die resultierenden Hauptdehnungen haben dabei nicht den gleichen Betrag sondern ein Verhältnis von longitudinaler zu transversaler Dehnung von beispielsweise 1 : -0,3.

$$K_{Effektiv} = \varepsilon \cdot (Y \cdot K_L - X \cdot K_T) \text{ mit } X = 0{,}3.$$

$$Y = 1.$$

Figur 4 zeigt eine Ausführungsform der Welle 1, bei welcher an jedem Längsrand eine halbkreisförmige Ausnehmung 7 eingebracht ist. In den radialen Bereichen 8 dieser halbkreisförmigen Ausnehmung 7 werden die Widerstände, wie im Zusammenhang mit Figur 3 erläutert, angeordnet. Ein Abschnitt entlang der Mittellinie M, in welchen die beiden sich gegenüberliegenden halbkreisförmigen Ausnehmungen 7 den kleinsten Abstand zueinander aufweisen, bleibt frei von Widerständen.

Sowohl die in Figur 3 als auch die in Figur 4 dargestellte Welle 1 ermöglicht die redundanzfähige Anordnung zweier Widerstandsbereiche z. B. je eine Widerstandsbrücke in jedem radialen Bereich 8 des Langloches 7.

Aufgrund dieser einfachen mechanischen Anordnung kann eine Signalerhöhung in Abhängigkeit von der verwendeten Dickschichtwiderstandspaste bis zu über 300% erzielt werden.

Um eine innige Verbindung des Dielektrikums 2 mit dem Träger 1 herzustellen, wird in einer ersten Ausführung das Dielektrikum 2 in Drucktechnik mittels einer nichtleitenden Paste auf der Welle 1 aufgetragen.

Die Paste enthält dabei eine Glasfritte, die bei geringerer Temperatur sinterbar ist, als das Material der Welle 1. Nach Aufbringen der Paste wird ebenfalls in Siebdrucktechnik eine leitende Schicht aufgebracht, die die Leiterbahn 3 und die Kontaktflächen 5 bildet, auf welcher wiederum die die Widerstände bildende Widerstandsschicht 4 angeordnet ist.

Die so vorbereitete Welle 1 wird in einem Hochtemperaturprozeß bei etwa einer Temperatur von 750° bis 900°C wärmebehandelt. Dabei versintert die Glasschicht mit der Oberfläche des Stahls der Welle 1. Bei diesem Aufsintern werden zwischen dem Dielektrikum 2 und der Welle 1 Oxydbrücken gebildet, die eine unlösbare Verbindung zwischen Welle 1 und Dielektrikum 2 gewährleisten.

Diese starre innige Verbindung bedeckt gegenüber der Klebetechnik eine geringere Dehnungshysterese.

Alternativ zu der pastenähnlichen Isolierschicht 2 kann diese auch als flexible Folienschicht aufgebracht werden. Dabei werden in einem ersten Schritt auf dem folienartigen Dielektrikum 2 in schon bekannter Art und Weise die Leiterbahn 3 und die Kontaktflächen 5 sowie die Widerstände aufgebracht. Das folienähnliche Dielektrikum wird danach auf die Welle 1 aufgelegt. Der dem radialen Bereich 8 des Langloches 7 angepaßte Bereich 8' der folienartigen Isolationsschicht 2 dient dabei als Justierhilfe, damit die dehnungsempfindlichen Widerstände in dem Bereich der Welle 1 angeordnet werden, in welchem bei Torsion der Welle 1 die größten Unterschiede zwischen lateralen und transversalen Dehnungskräften auftreten.

Das beschriebene folienähnliche Dielektrikum 2 besteht aus einem Kunstharz mit einer Glasfritte, auf welcher durch Siebdrucktechnik das Muster des Widerstandes aufgebracht wird. In Siebdrucktechnik werden nacheinander die Leiterbahn 3 mit den Kontaktflächen 5 sowie der Meßwiderstand und anschließend die Passivierungsschicht 6 aufgebracht. Widerstand und Leiterbahn 3 sind Leitpasten, die leitende Teilchen und Glasfritte enthalten. Während eines Hochtemperaturprozesses von ungefähr 850°C erfolgt ein Aufsintern sämtlicher Schichten auf der Welle 1 sowie ein rückstandsloses Vergasen des im Dielektrikum 2 enthaltenen Kunststoffs. Auch hier wird durch das entstehen von Oxydbrücken zwischen Welle 1 und Dielektrikum 2 eine haltbare Verbindung zwischen beiden erzeugt. Nach dem Sintern verbleiben die Strukturen von Isolations- und Leitschichten auf der Welle 1.

In Figur 5 ist eine Anordnung für einen dehnungsempfindlichen Widerstand dargestellt, der separat vom eigentlichen Trägerelement, der Welle 1 hergestellt und anschließend auf diese Welle 1 aufgebracht wird.

Auf einem Trägerblatt 10, welches beispielsweise ein handelsübliches Wachspapier ist, wird eine nicht leitende Paste als Isolationsschicht 2 im Siebdruckverfahren aufgedruckt und getrocknet. Die Paste enthält eine Glasfritte, die bei geringerer Temperatur sinterbar ist, als das Material der Welle 1. Nach der Trocknung der Paste wird die Leiterbahn 3 ebenfalls im Siebdruck aufgedruckt und getrocknet und anschließend zur Erzeugung der Widerstandsschicht 4 eine Platinteilchen enthaltende Leitpaste auf die Leiterbahnschicht 3 aufgedruckt. Nach der Trocknung dieser Widerstandsschicht 4 wird die gesamte Struktur bestehend aus Dielektrikum 2, Leiterbahn 3 und Widerstand mit einer flexiblen Kunstharzschicht 11 vollständig bedeckt, die als Folie wirkt. Diese Folie 11 haftet mit ihren Rändern auf dem Trägerblatt 10.

Diese vorbereitete Anordnung wird nun nach dem Prinzip eines Abziehbildes vom Trägerblatt 10 entfernt, indem die flexible Folienschicht 11 als Transporthilfe für die Strukturen 2, 3, 4 genutzt wird.

Da die Haftung des Dielektrikums 2 an dem Trägerblatt 10 wesentlich geringer ist als an der flexiblen Folienschicht 11, verbleibt beim Trennen von Trägerblatt 10 und der flexiblen Folienschicht 11 die gesamte Widerstandsstruktur 4 und das Dielektrikum 2 immer auf der Folienschicht 11.

Diese Folienschicht 11 wird so auf die Welle 1 gelegt, daß der radiale Bereich des Dielektrikums 2 mit dem radialen Bereich 8 des Langloches 7 in Deckung gebracht wird. Das Dielektrikum 2 tritt dabei in direkten Kontakt mit der Welle 1. Da die über das Dielektrikum 2 hinausragende Folienschicht 11 haftende Eigenschaften besitzt, verbleibt die beschriebene Anordnung in ihrer auf den Träger 1 aufgebrachten Lage.

Vor dem Aufbringen der Struktur auf die Welle 1 wird der Stahl mit einem Haftvermittler zur besseren Fixierung des Dielektrikums 2 auf der Welle 1 benetzt.

Beim sich daran anschließenden Hochtemperaturprozeß verbrennt bzw. vergast die flexible Folienschicht 11 bei einer Temperatur von annähernd 300°C. Bei einer weiteren Erhöhung der Temperatur auf annähernd 700° bis 900°C versintert die Glasschicht des Dielektrikums 2 mit der Oberfläche der Welle 1. Bei diesem Aufsintern werden zwischen dem Dielektrikum 2 und der Welle 1 Oxydbrücken gebildet, die eine unmittelbare Verbindung zwischen Welle 1 und Dielektrikum 2 gewährleisten.

Nach dem rückstandslosen Vergasen der flexiblen Folienschicht 11 verbleiben die Strukturen in Form von Isolations-, Leitbahn- und Widerstandsschichten auf der Welle 1.

Durch das Trägerblatt 10 ist die Anordnung sehr praktisch zu handhaben, da keine Gefahr des unbeabsichtigten Verklebens der flexiblen Folienschicht 11 vor Abziehen des Trägerblattes 10 besteht.

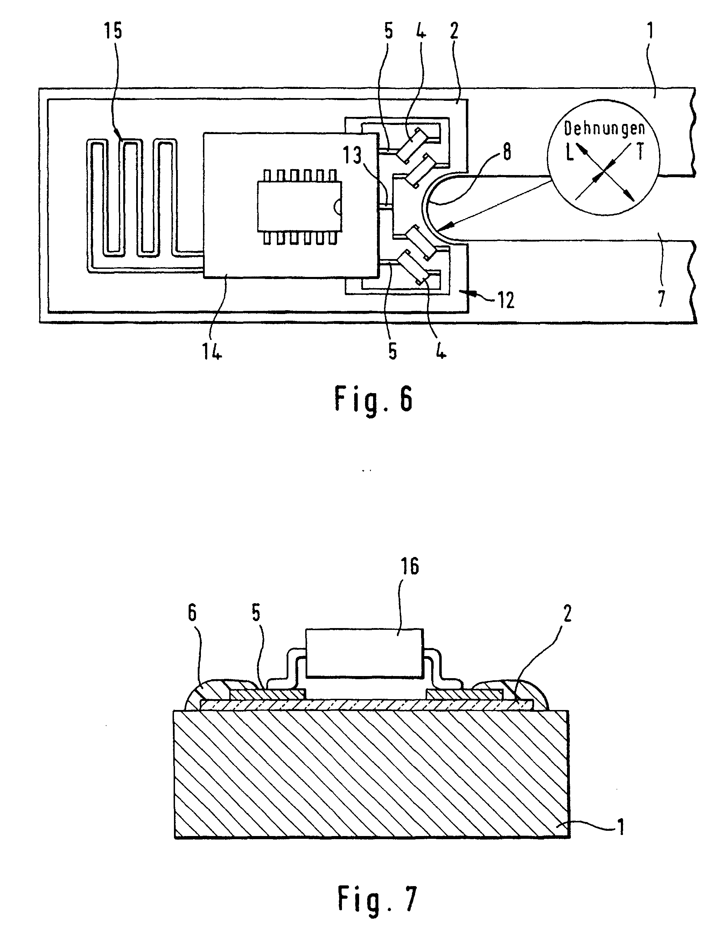

Figur 6 zeigt einen Dickschichtdrehmomentsensor-Hybrid mit den eben erläuterten Dehnungsmeßstreifen, der in Hilfskrafteinrichtungen von Kraftfahrzeugen, insbesondere bei elektrischen oder elektrohydraulischen Lenkhilfesystemen Einsatz findet.

Die zu belastende Welle 1 ist quaderförmig gestaltet. Auf der Welle 1 ist in der oben beschriebenen Art und Weise ein Dielektrikum 2 angeordnet, auf welchen eine Widerstandsmeßbrücke 12 mittels den als Dehnungsmeßstreifen wirkenden Meßwiderständen 4 aufgebracht ist. Die Widerstandsmeßbrücke 12 besteht in bekannter Art und Weise aus vier Widerständen 4, die über Leiterbahnen 3 mit elektrischen Kontaktflächen 5 verbunden sind.

Wie aus Figur 6 erkennbar ist, ist die in Dickschichttechnik aufgebrachte Widerstandsmeßbrücke 12 über eine ebenfalls in Dickschichttechnik hergestellte Leiterbahn 13 mit der Auswerteelektronik 14 verbunden. Die Auswerteelektronik 14 besteht aus diskreten Bauelementen, die an den Kontaktflächen 5 mit der Widerstandsmeßbrücke 12 verbunden sind. Diese Auswerteelektronik 14 kann separat oder aber wie im vorliegenden Fall direkt auf der Welle 1 angeordnet sein, wo sie an den Kontaktflächen 5 verlötet ist.

Zur berührungslosen Signalübertragung des Sensorsignales ist eine Spule 15 ebenfalls aus in Dickschichttechnik gefertigte Leiterbahn und Kontaktflächen auf der Welle 1 ausgebildet und mit der Auswerteelektronik 14 verbunden. Alternativ kann die Spule auch in konventioneller Technik (Wicklung) aufgebaut sein.

Durch die Möglichkeit, die Spule 15 in Dickschichttechnik aufzudrucken, werden externe Lötverbindungen eingespart. Die Kontaktierung der Auswerteelektronik 14 erfolgt dabei vorteilhafterweise an den Kontaktflächen 5 durch Oberflächenmontage (SMD-Technik). Dadurch entsteht ein Hybrid, der das Sensorelement und die Elektronik umfaßt und direkt auf der Welle 1 erstellt werden kann. Ein solcher Sensor kann mit Kunststoff, z. B. Silikon vergossen werden.

Durch einen solchen, die Oberflächendehnung auf der Welle 1 messenden Sensor wird beim Einsatz in Lenkhilfesystemen ein direkter Durchtrieb von Rad zum Fahrer ohne zusätzliche Elastizität in der Lenkwelle gewährleistet.

In Figur 7 ist das erfindungsgemäße Drehmoment-Sensorhybrid im Schnitt dargestellt. Auf den von der Passivierungsschicht 6 unbedeckten Kontaktflächen 5 sind diskrete Bauteile 16 der Auswerteschaltung 14 aufgelötet.

**Patentansprüche**

1.  Dehnungsempfindlicher Widerstand, bestehend aus einem Trägerelement (1) und einer Widerstandsschicht, wobei die Widerstandsschicht (4) auf dem Trägerelement (1) angeordnet ist und das Trägerelement (1) und die Widerstandsschicht (4) durch eine Isolationsschicht (2) getrennt sind und das Trägerelement (1) auf seiner Oberfläche (9) eine Ausnehmung (7) aufweist, welche bei mechanischer Beanspruchung des Trägerelementes (1) ein betragsmäßig ungleiches Verhältnis von longitudinaler und transversaler Dehnung der Widerstandsschicht (4) erzeugt, **dadurch gekennzeichnet, daß** das Trägerelement (1) ein mechanisch durch Torsion zu beanspruchendes Bauteil ist, und die Widerstandsschicht (4) in mindestens einem Bereich der Oberfläche (9) des Trägerelementes (1) positioniert ist, welcher aufgrund einer Überlagerung der auf der Oberfläche angreifenden Torsions- und Biegespannungen das betragsmäßig ungleiche Verhältnis longitudinaler (L) und transversaler Dehnung (T) der Widerstandsschicht (4) erzeugt.

2. Dehnungsempfindlicher Widerstand nach Anspruch 1 **dadurch gekennzeichnet, daß** die Ausnehmung (7) als durchgängige Öffnung des Trägerelementes (1) ausgebildet ist.

3. Dehnungsempfindlicher Widerstand nach Anspruch 2 **dadurch gekennzeichnet, daß** die Öffnung als Langloch (7) ausgebildet ist, wobei die Widerstandsschicht (4) in der Nähe eines radialen Bereiches (8) des Langioches (7) angeordnet ist.

4. Widerstand nach einem der Ansprüche 1, 2 oder 3 **dadurch gekennzeichnet, daß** die Widerstandsschicht (4) auf einer plan ausgebildeten Oberfläche (9) des Trägerelementes (1) angeordnet ist.

5. Dehnungsempfindlicher Widerstand nach einem der vorhergehenden Ansprüche **dadurch gekennzeichnet, daß** die pastenartig ausgebildete, in Drucktechnik auf das Trägerelement (1) aufgebrachte Widerstandsschicht (4) während eines Hoohtemperaturprozesses eine Innige Verbindung mit dem Trägerelement (1) eingeht.

6. Dehnungsempfindlicher Widerstand nach Anspruch 6, **dadurch gekennzeichnet, daß** das Trägerelement (1) elektrisch leitend ausgebildet ist, wobei zwischen der Widerstandsschicht (4) und dem Trägerelement (1) eine Isolationsschicht (2) angeordnet ist

7. Dehnungsempfindlicher Widerstand nach Anspruch 6, **dadurch gekennzeichnet, daß** die Isolationsschicht (2) pastenartig ausgebildet ist und in einem selbständigen Hochtemperaturpmzeß vor der Widerstandsschicht (4) oder gemeinsam mit der Widerstandsschicht (4) während eines Hochtemperaturprozesses auf das Trägerelement (1) aufgebracht wird.

8. Dehnungsempfindlicher Widerstand nach Anspruch 6, **dadurch gekennzeichnet, daß** die Isolationsschicht (2) folienartig ausgebildet ist und während eines selbständigen Hochtemperaturprozesses vor der Widerstandsschicht (4) oder gemeinsam mit der Widerstandsschicht (4) während eines Hochtemperaturprozesses auf das Trägerelement (1) aufgebracht wird.

9. Mechanisch-elektrischer Wandler bestehend aus einem Trägerelement (1), auf welchem eine dehnungsempfindliche Widerstände bildende Widerstandsschicht (4) angeordnet ist, wobei die Widerstandsschicht (4) und das Trägerelement (1) durch eine Isolationsschicht (2) getrennt sind und an den Widerständen ein der Dehnung entsprechendes elektrisches Signal abnehmbar ist, wobei das Trägerelement (1) auf seiner Oberfläche eine Ausnehmung (7) aufweist, welche bei mechanischer Beanspruchung des Trägerelementes (1) ein betragsmäßig ungleiches Verhältnis von longitudinaler und transversaler Dehnung der Widerstandsschicht (4) erzeugt, **dadurch gekennzeichnet, daß** das Trägerelement (1) das mechanisch durch Torsion zu belastende Bauteil ist, und die Widerstände in mindestens einem Bereich der Oberfläche des Trägerelementes (1) positioniert sind, welcher bei mechanischer Beanspruchung des Trägerelementes (1) aufgrund der Überlagerung von Torsions- und Biegespannungen das betragsmäßig ungleiche Verhältnis der longitudinalen (L) und transversalen Dehnung (T) erzeugt, wobei auf dem Trägerelement (1) eine Auswerteelektronik (14) für das der Dehnung entsprechende elektrische Signal angeordnet ist.

10. Mechanisch-elektrischer Wandler nach Anspruch 9 **dadurch gekennzeichnet. dass** die Widerstände (4) und die Struktur der Auswerteeisktronik (14) auf einer gemeinsamen, follenartigen Isolationsschicht (2) angeordnet sind.

11. Verfahren zur Herstellung des dehnungs empfindlichen Widerstandes nach Anspruch 1, bei welchem auf dem Trägerelement nacheinander die Isolationsschicht und die Widerstandsschicht aufgebracht werden, **dadurch gekennzeichnet, daß** die folienartig ausgebildete, die Widerstandsschicht (4) tragende Isolationsschicht (2) in mindestens einem Dereich der Form der Ausnehmung (7) an der Oberfläche (9) des Trägerelementes (1) angepaßt ist, wobei dieser Bereich deckungsgleich mit dieser Form der Ausnehmung (7) auf die Oberfläche (9) des Trägerelementes (1) aufgebracht und anschließend wärmebeaufschlagt wird.

12. Verfahren zur Herstellung eines dehnungsempfindlichen Widerstandes nach Anspruch 1, bei welchem auf dem Trägerelement nacheinander die Isoiationsschicht und die Widerstandsschicht aufgebracht werden, **dadurch gekennzeichnet, daß** die Isolationsschicht (2) und/oder die Widerstandsschicht (4) auf ein Trägerblatt (10) aufgebracht werden, wonach die die Isolations- (2) und/oder Widerstandsschicht (4) tragende Seite des Trägerblattes (10) mit einer flexiblen Folienschicht (11) vollständig überdeckt wird, deren Haftung an der Isolations- (2) und/oder Widerstandsschicht (4) größer ist als die Haftung des Trägerblattes (10) an der Isolations- (2) und/oder Widerstandsschicht (4), wobei mindestens die Folienschicht (11) in einem Bereich der Form der Ausnehmung (7) an der Oberfläche (9) des Träserelementes (1) angepaßt ist, und die Folienschicht (11) mit der Isolations- (2) und/oder Widerstandsschicht (4) derart auf das Trägerelement (1) aufgebracht wird, daß die übereinstimmend geformten Bereiche der Ausnehmung (7) und der Folienschicht (11) deckungsgleich ausgerichtet sind, wobei das Trägerelement (1) zum Ausbrennen der Folienschicht (11) und Aufsintern der Isolations- (2) und/oder Widerstandsschicht (4) anschließend wärmebeaufschlagt wird.

**13.** Verfahren nach Anspruch 12, **dadurch gekennzeichnet, daß** die Isolationsschicht- (2) und/oder die Widerstandsschicht (4) in Drucktechnik auf das Trägerblatt (10) aufgebracht und getrocknet werden.

**14.** Verfahren nach Anspruch 12 oder 13, **dadurch gekennzeichnet, daß** nach dem Aufbringen der Isolationsschicht (2) auf dem Trägerblatt (10) eine Widerstandsschicht (4) auf diese Isolationsschicht (2) aufgebracht wird, wobei anschiießend die die Isolationsschicht (2) und die Widerstandsschicht (4) vollständig überdeckende Folienschicht (11) angeordnet wird.

**15.** Verfahren nach Anspruch 14, **dadurch gekennzeichnet, daß** die Isolationsschicht (2) in Form von einer Glasfritte auf das Trägerblatt (10) aufgedruckt wird und nach dem Trocknen der Glasfritte eine Leitpaste als Widerstandsschicht (4) auf die Isolationsschicht aufgedruckt und getrocknet wird und anschließend die Folienschicht (11) aufgebracht wird.

**16.** Verfahren nach Anspruch 13, **dadurch gekennzeichnet, daß** die auf einem ersten Trägerblatt angeordnete und getrocknete Isolationsschicht (2) auf das Trägerelement (1) mittels der Folienschicht (11) aufgebracht und wärrnebeaufschlagt wird, und anschließend die auf einem zweiten Trägerblatt gedruckte und getrocknete Widerstandsschicht (4) mit Hilfe der auf ihr angeordneten zweiten Folienschicht (11) auf der schon wärmebehandelten isotationsschicht (2) angeordnet wird und anschließend ebenfalls wärmebehandelt wird.

**Claims**

**1.** Strain-sensitive resistor, comprising a support element (1) and a resistance layer, the resistance layer (4) being arranged on the support element (1), and the support element (1) and the resistance layer (4) being separated by an insulating layer (2), and the support element (1) having a recess (7) on its surface (9) which, when the support element (1) is subjected to mechanical stress, produces a ratio between the longitudinal and transverse strains in the resistance layer (4) which differs in magnitude, **characterized in that** the support element (1) is a component to be stressed mechanically by torsion, and the resistance layer (4) is positioned in at least one area of the surface (9) of the support element (1) which, because of the superimposition of the torsional and flexural stresses acting on a surface, produces the ratio of different magnitude between the longitudinal (L) and transverse (T) strains in the resistance layer (4).

**2.** Strain-sensitive resistor according to Claim 1, **characterized in that** the recess (7) is formed as a continuous opening in the support element (1).

**3.** Strain-sensitive resistor according to Claim 2, **characterized in that** the opening is formed as a slot (7), the resistance layer (4) being arranged in the vicinity of a radial area (8) of the slot (7).

**4.** Resistor according to one of Claims 1, 2 or 3, **characterized in that** the resistance layer (4) is arranged on a planar surface (9) of the support element (1).

**5.** Strain-sensitive resistor according to one of the preceding claims, **characterized in that** the paste-like resistance layer (4) applied to the support element (1) by a printing technique enters into an intimate connection with the support element (1) during a high-temperature process.

**6.** Strain-sensitive resistor according to Claim 5, **characterized in that** the support element (1) is electrically conductive, an insulating layer (2) being arranged between the resistance layer (4) and the support element (1).

**7.** Strain-sensitive resistor according to Claim 6, **characterized in that** the insulating layer (2) is paste-like and is applied to the support element (1) before the resistance layer (4), in a self-contained high-temperature process, or together with the resistance layer (4), during a high-temperature process.

**8.** Strain-sensitive resistor according to Claim 6, **characterized in that** the insulating layer (2) is film-like and is applied to the support element (1) before the resistance layer (4), in a self-contained high-temperature process, or together with the resistance layer (4), during a high-temperature process.

9. Mechanical-electrical transducer comprising a support element (1), on which a resistance layer (4) which forms strain-sensitive resistors is arranged, the resistance layer (4) and the support element (1) being separated by an insulating layer (2) and it being possible to pick off an electrical signal corresponding to the strain from the resistors, the support element (1) having a recess (7) on its surface which, when the support element (1) is subjected to mechanical stress, produces a ratio between the longitudinal and transverse strains in the resistance layer (4) which differs in magnitude, **characterized in that** the support element (1) is the component to be loaded by torsion, and the resistors are positioned in at least one area of the surface of the support element (1) which, when the support element (1) is stressed mechanically, because of the superimposition of torsional and flexural stresses, produces the ratio of different magnitude between the longitudinal (L) and transverse strain (T), evaluation electronics (14) for the electrical signal corresponding to the strain being arranged on the support element (1).

10. Mechanical-electrical transducer according to Claim 9, **characterized in that** the resistors (4) and the structure of the evaluation electronics (14) are arranged on a common, film-like insulating layer (2).

11. Method of producing the strain-sensitive resistor according to Claim 1, in which the insulating layer and the resistance layer are applied to the support element one after another, **characterized in that** the film-like insulating layer (2) bearing the resistance layer (4) in at least one area is matched to the shape of the recess (7) in the surface (9) of the support element (1), this area being applied to the surface (9) of the support element (1) so as to be congruent with this shape of the recess (7), and subsequently being subjected to the action of heat.

12. Method of producing a strain-sensitive resistor according to Claim 1, in which the insulating layer and the resistance layer are applied to the support element one after another, **characterized in that** the insulating layer (2) and/or the resistance layer (4) are applied to a support sheet (10), after which the side of the support sheet (10) that bears the insulating layer (2) and/or resistance layer (4) is completely covered with a flexible film layer (11), whose adhesion to the insulating layer (2) and/or resistance layer (4) is greater than the adhesion of the support sheet (10) to the insulating layer (2) and/or resistance layer (4), at least the film layer (11) being matched in one area to the shape of the recess (7) in the surface (9) of the support element (1), and the film layer (11) with the insulating layer (2) and/or resistance layer (4) being applied to the support element (1) in such a way that the correspondingly shaped areas of the recess (7) and the film layer (11) are aligned congruently, the support element (1) subsequently being subjected to the action of heat to burn out the film layer (11) and sinter on the insulating layer (2) and/or resistance layer (4).

13. Method according to Claim 12, **characterized in that** the insulating layer (2) and/or the resistance layer (4) are applied to the support sheet (10) by a printing technique and dried.

14. Method according to Claim 12 or 13, **characterized in that**, following the application of the insulating layer (2) to the support sheet (10), a resistance layer (4) is applied to this insulating layer (2), the film layer (11) completely covering the insulating layer (2) and the resistance layer (4) being arranged subsequently.

15. Method according to Claim 14, **characterized in that** the insulating layer (2) is printed onto the support sheet (10) in the form of a glass frit and, after the glass frit has been dried, a conductive paste is applied to the insulating layer as the resistance layer (4) and dried, and the film layer (11) is then applied.

16. Method according to Claim 13, **characterized in that** the insulating layer (2), arranged on a first support sheet and dried, is applied to the support element (1) by means of the film layer (11) and subjected to the action of heat, and then the resistance layer (4), printed on a second support sheet and dried, is arranged on the already heat-treated insulating layer (2) with the aid of the second film layer (11) arranged on said resistance layer (4) and is then likewise heat-treated.

**Revendications**

1. Résistance sensible à l'allongement comprenant un élément porteur (1) et une couche de résistance, la couche de résistance (4) étant disposée sur l'élément porteur (1). l'élément porteur (1) et la couche de résistance (4) étant séparés par une couche d'isolation (2) et l'élément porteur (1) présentant sur sa surface (9) un évidement (7) qui, en cas de sollicitation mécanique de l'élément porteur (1), engendre un rapport inégal d'allongement longitudinal et transversal de la couche de résistance (4), **caractérisée en ce que** l'élément porteur (1) est un composant devant être soumis mécaniquement à un effort de torsion et **en ce que** la couche de résistance (4) est positionnée dans au moins une zone de la surface (9) de l'élément porteur (1) qui, en raison d'une superposition des contraintes de torsion et de flexion s'exerçant sur la surface, engendre le rapport inégal d'allongement longitudinal (L) et transversal (T) de la couche de résistance (4).

2. Résistance sensible à l'allongement selon la revendication 1, **caractérisée en ce que** l'évidement (7) est formé en tant qu'ouverture traversant l'élément porteur (1) de part en part.

3. Résistance sensible à l'allongement selon la revendication 2, **caractérisée en ce que** l'ouverture est formée en tant que trou oblong (7), la couche de résistance (4) étant disposée à proximité d'une zone arrondie (8) du trou oblong (7).

4. Résistance selon l'une des revendications 1, 2 ou 3, **caractérisée en ce que** la couche de résistance (4) est disposée sur une surface plane (9) de l'élément porteur (1).

5. Résistance sensible à l'allongement selon l'une des revendications précédentes, **caractérisée en ce que** la couche de résistance (4) réalisée en forme de pâte et appliquée sur l'élément porteur (1) une technique d'impression contracte, lors d'un processus à hautes températures, une liaison intime avec l'élément porteur (1).

6. Résistance sensible à l'allongement selon la revendication 6, **caractérisée en ce que** l'élément porteur (1) est électroconducteur, une couche d'isolation (2) étant disposée entre la couche de résistance (4) et l'élément porteur (1).

7. Résistance sensible à l'allongement selon la revendication 6, **caractérisée en ce que** la couche d'isolation (2) est réalisée sous forme de pâte et est appliquée sur l'élément porteur (1) soit séparément lors d'un procédé à haute température indépendant ayant lieu avant l'application de la couche de résistance (4), soit ensemble avec la couche de résistance (4) lors d'un seul et même procédé à haute température.

8. Résistance sensible à l'allongement selon la revendication 6, **caractérisée en ce que** la couche d'isolation (2) est réalisée sous forme de feuille et est appliquée sur l'élément porteur (1) soit séparément lors d'un procédé à haute température indépendant ayant lieu avant l'application de la couche de résistance (4), soit ensemble avec la couche de résistance (4) lors d'un seul et même procédé à haute température.

9. Convertisseur mécano-électrique comprenant un élément porteur (1). sur lequel est disposée une couche de résistance (4) formant des résistances sensibles à l'allongement, la couche de résistance (4) et l'élément porteur (1) étant séparés par une couche d'isolation (2) et un signal électrique correspondant à l'allongement pouvant être capté aux résistances. l'élément porteur (1) présentant sur sa surface un évidement (7) qui engendre, en cas de sollicitation mécanique de l'élément porteur (1), un rapport inégal d'allongement longitudinal et transversal de la couche de résistance (4), **caractérisé en ce que** l'élément porteur (1) est le composant devant être sollicité mécaniquement par torsion et **en ce que** les résistances sont positionnées dans au moins une zone de la surface de l'élément porteur (1) qui engendre, en cas de sollicitation mécanique de l'élément porteur (1), un rapport Inégal d'allongement longitudinal (L) et transversal (T) en raison de la superposition des contraintes de torsion et de flexion, une électronique d'évaluation (14) du signal électrique correspondant à l'allongement étant disposée sur l'élément porteur (1).

10. Convertisseur mécano-électrique selon la revendication 9, **caractérisé en ce que** les résistances (4) et la structure de l'électronique d'évaluation (14) sont disposées sur une couche d'isolation (2) commune, en forme de feuille.

11. Procédé destiné à la fabrication de la résistance sensible à l'allongement selon la revendication 1, par lequel la couche d'isolation et la couche de résistance sont appliquées successivement sur l'élément porteur, **caractérisé en ce que** la couche d'isolation (2) réalisée sous forme de feuille et portant la couche de résistance (4) est adaptée, dans au moins une zone, à la forme de l'évidement (7) ménagé à la surface (9) de l'élément porteur (1), cette zone étant appliquée sur la surface (9) de l'élément porteur (1) de manière à coïncider avec cette forme de l'évidement (7) et ensuite soumise à un traitement thermique.

12. Procédé destiné à la fabrication d'une résistance sensible à l'allongement selon la revendication 1, par lequel la couche d'isolation et la couche de résistance sont appliquées successivement sur l'élément porteur, **caractérisé en ce que** la couche d'isolation (2) et/ou la couche de résistance (4) sont appliquées sur une feuille porteuse (10), après quoi le côté de la feuille porteuse (10) portant la couche d'isolation (2) et/ou de résistance (4) est entièrement recouvert par une couche souple (11) en forme de feuille dont l'adhérence à la couche d'isolation (2) et/ou de résistance (4) est supérieure à l'adhérence de la feuille porteuse (10) à la couche d'isolation (2) et/ou de résistance (4), la couche (11) en forme de feuille au moins étant adaptée. dans une zone, à la forme de l'évidement (7) ménagé à la surface (9) de l'élément porteur (1) et la couche (11) en forme de feuille comportant la couche d'isolation (2) et/ou de résistance (4) étant appliquée sur l'élément porteur (1) de telle sorte que les zones de l'évidement (7) et de la couche (11) en forme de feuille conçues à l'identique sont orientées de manière à coïncider, l'élément porteur (1) étant ensuite soumis à un traitement thermique afin de brûler la couche (11) en forme de feuille et de soumettre la couche d'isolation (2) et/ou de résistance (4) à un frittage.

**13.** Procédé selon la revendication 12, **caractérisé en ce que** la couche d'isolation (2) et/ou la couche de résistance (4) sont appliquées par une technique d'impression sur la feuille porteuse (10), puis séchées.

**14.** Procédé selon la revendication 12 ou 13, **caractérisé en ce que**, après application de la couche d'isolation (2) sur la feuille porteuse (10), une couche de résistance (4) est appliquée sur cette couche d'isolation (2), à la suite de quoi on procède à la disposition de la couche (11) en forme de feuille qui recouvre entièrement la couche d'isolation (2) et la couche de résistance (4).

**15.** Procédé selon la revendication 14, **caractérisé en ce que** la couche d'isolation (2) est imprimée sous la forme d'une fritte de verre sur la feuille porteuse (10) et **en ce que**, une fois la fritte de verre séchée, une pâte conductrice faisant office de couche de résistance (4) est imprimée sur la couche d'Isolation et séchée, sur quoi on procède à l'application de la couche (11) en forme de feuille.

**16.** Procédé selon la revendication 13, **caractérisé en ce que** la couche d'isolation (2) disposée sur une première feuille porteuse et séchée est appliquée sur l'élément porteur (1) au moyen de la couche (11) en forme de feuille et soumise à un traitement thermique, et **en ce que** la couche de résistance (4) imprimée sur une deuxième feuille porteuse et séchée est ensuite disposée, à l'aide de la deuxième couche (11) en forme de feuille disposée sur elle, sur la couche d'isolation (2) préalablement soumise à un traitement thermique, puis est à son tour soumise à un traitement thermique.

EP 1 068 501 B1

Fig.1

Fig.2 (A-A')

Fig. 3a

Fig. 3b

Fig. 4

Fig. 5

Fig. 6

Fig. 7